# EUROPÄISCHE PATENTANMELDUNG

(11) **EP 2 106 851 A1**
(43) Veröffentlichungstag der Anmeldung: **07.10.2009**
(21) Anmeldenummer: 09004502.2
(22) Anmeldetag: 27.03.2009
(51) Int. Cl.: B01J 19/24

(54) **Kompaktreaktor**

(30) Priorität: 04.04.2008 DE 102008017342
(71) Anmelder: Linde AG, 80331 München (DE)
(72) Erfinder: Schödel, Nicole Dr., 81477 München (DE); Nowakowski, Bruno, 84549 Engelsberg (DE); Hecht, Thomas, 82131 Gauting (DE); Müller, Wolfgang Dr., 81245 München (DE); Aigner, Herbert, 84549 Engelsberg (DE); Neuendorf, Stephanie Dr., 82069 Hohenschäftlarn (DE)

(57) **Zusammenfassung**

Die Erfindung betrifft einen Kompaktreaktor bestehend aus einer Vielzahl stapelförmig angeordneter und voneinander beabstandeter Platten, wobei
a) die Platten durch Abstandshalter beabstandet und gegeneinander gasdicht abgedichtet sind,
b) die Platten wellenförmig profiliert sind, so dass durch die Wellentäler Strömungskanäle gebildet werden, welche durch die Wellenberg (Fins) voneinander getrennt sind,
c) die Strömungskanäle parallel zueinander und parallel zu einer Seite der Platte verlaufen,
d) die Strömungskanäle zumindest teilweise mindestens ein Katalysatormaterial enthalten, welches derart eingebracht ist, dass die Strömungskanäle für gasförmige und/oder flüssige Medien durchströmbar sind, und
e) der Kompaktreaktor Mittel zur Zu- bzw. Abführung (Header) von mindestens zwei gasförmigen und/oder flüssigen Medien zu den Strömungskanälen aufweist. Ferner betrifft die Erfindung die Verwendung eines Kompaktreaktors. Die Fins zwischen den einzelnen Strömungskanälen einer Platte sind für das, in den Strömungskanälen strömende, gasförmige und/oder flüssige Medium durchlässig.

## Beschreibung

Die Erfindung betrifft einen Kompaktreaktor bestehend aus einer Vielzahl stapelförmig angeordneter und voneinander beabstandeter Platten, wobei
a) die Platten durch Abstandshalter beabstandet und gegeneinander gasdicht abgedichtet sind,
b) die Platten wellenförmig profiliert sind, so dass durch die Wellentäler Strömungskanäle gebildet werden, welche durch die Wellenberge (Fins) voneinander getrennt sind,
c) die Strömungskanäle parallel zueinander und parallel zu einer Seite der Platte verlaufen,
d) die Strömungskanäle zumindest teilweise mindestens ein Katalysatormaterial enthalten, welches derart eingebracht ist, dass die Strömungskanäle für gasförmige und/oder flüssige Medien durchströmbar sind, und
e) der Kompaktreaktor Mittel zur Zu- bzw. Abführung (Header) von mindestens zwei gasförmigen und/oder flüssigen Medien zu den Strömungskanälen aufweist. Ferner betrifft die Erfindung die Verwendung eines Kompaktreaktors und ein diesbezügliches Verfahren. Die Erfindung wird am Beispiel eines Verfahrens zur Herstellung von längerkettigen Kohlenwasserstoffen aus Methan und eines dabei verwendeten Kompaktreaktors zur gleichzeitigen Durchführung einer endothermen Dampf-Reformierung und einer exothermen katalytischen Verbrennung beschrieben, ohne darauf eingeschränkt zu sein. Der erfindungsgemäße Kompaktreaktor ist prinzipiell zur Durchführung beliebiger endothermer und/oder exothermer Reaktionen geeignet.

Ein Verfahren zur Umwandlung von Methan zu längerkettigen Kohlenwasserstoff wird in der Patentveröffentlichung WO2007125360 beschrieben. Derartige Verfahren basieren im Wesentlichen auf zwei katalytischen Reaktionen. Zuerst wird ein Methanhaltiger Einsatzstoff in ein Verfahren zur katalytischen Dampfreformierung geführt. Entsprechend der Reaktionsgleichung

CH₄ + H₂O --> CO + 3H₂

wird das Methan des Einsatzstoffes in Synthesegas umgewandelt. Diese Reaktion ist endotherm. Die notwendige Wärme für die Reaktion wird nach dem Stand der Technik durch eine katalytische Verbrennung geliefert. Die katalytische Dampf-Reformierung startet erst ab einer Temperatur von 400°C. Üblicherweise werden die Einsatzstoffe für die katalytische Verbrennungsreaktion mit einer Temperatur von ca. 450°C in das Verfahren zur katalytischen Verbrennung geführt und verlassen dieses mit einer Ausgangstemperatur zwischen 800°C und 850°C.

Die Synthesegashaltigen Reaktionsprodukte der katalytischen Dampf-Reformierung werden als Einsatzstoff in ein Verfahren zur Fischer-Tropsch Synthese geführt. Entsprechend der Reaktionsgleichung

nCO + 2nH₂ --> (CH₂)n + nH₂O

werden längerkettige Kohlenwasserstoffe aus dem Synthesegas gebildet. Diese Reaktion läuft ebenfalls an einem Katalysatormaterial ab, ist aber exotherm in einem Temperaturbereich zwischen 190°C und 280°C. Für einen optimalen Reaktionsverlauf der exothermen Fischer-Tropsch Synthese muss die Temperatur annähernd konstant gehalten werden, so dass die Reaktion nach dem Stand der Technik im Wärmeaustausch mit einem Kälteträger durchgeführt wird.

Nach dem Stand der Technik werden beide Reaktionen in einem Kompaktreaktor durchgeführt. Ein Kompaktreaktor zur gleichzeitigen Durchführung der Dampf-Reformierung und einer wärmeliefernden katalytischen Verbrennung wird sowohl in WO2007129108 als auch EP1248675 beschrieben.

Der in EP1248675 beschriebene Kompaktreaktor besteht aus einer Vielzahl von stapelförmig angeordneten und voneinander beabstandeten Platten. Die Platten sind durch Abstandshalter voneinander getrennt und gasdicht gegeneinander abgeschlossen. Die Einsatzstoffe für die katalytische Dampf-Reformierung und die katalytische Verbrennung werden über Mittel zur Zu- und Abführung (Header) wechselweise auf die Platten verteilt. Die Platten sind wellenförmig profiliert, wobei durch die Wellentäler Strömungskanäle für die Einsatzstoffe der jeweiligen Reaktion gebildet werden. Die Strömungskanäle sind durch die Wellenberge (Fins) voneinander getrennt. Die Breite der Wellentäler ist hier deutlich größer als die Breite der Fins. Die Strömungskanäle verlaufen parallel zueinander und parallel zu einer Seite der Platte. Die Strömungskanäle zweier benachbarter Platten, durch die einmal die Einsatzstoffe der katalytischen Dampf-Reformierung und zum anderen die Einsatzstoffe der katalytischen Verbrennung geführt werden, verlaufen senkrecht zueinander. Durch die gasdichte Abdichtung zwischen den jeweiligen Platten, können sich Druck und Temperatur der Medien in den Strömungskanälen benachbarter Platten deutlich unterscheiden. In die Strömungskanäle ist Katalysatormaterial derart eingebracht, dass die Strömung der Medien erhalten bleibt. EP1248675 offenbart hier wellenförmig angeordnete Metallfolien aus einem Aluminium enthaltenden Ferritstahl, der einen anhaftenden Oxidüberzug aus Aluminiumoxid bei Erhitzung in Luft bildet. Auf der Oberfläche der Metallfolien sowie auf der Oberfläche der Strömungskanäle ist das Katalysatormaterial aufgebracht. Die Wellendichte der Metallfolien sowie die Breite der Strömungskanäle kann sich über der Länge in Strömungsrichtung ändern

WO2007129108 offenbart einen ähnlichen Kompaktreaktor mit katalysatortragenden, wellenförmig in die Strömungskanäle eingebrachten Metallfolien, welche zwei verschiedene Wellendichten aufweisen. Ebenfalls offenbart werden wabenförmige Strukturen mit Katalysatormaterial auf der Oberfläche in den Strömungskanälen.

Bei den Kompaktreaktoren nach dem Stand der Technik werden die Reaktanten in den Einsatzstoffen der jeweiligen Reaktionen durch die Strömungskanäle an dem Katalysatormaterial vorbeigeführt. Für eine optimale Reaktionsausbeute müssen möglichst 100% der Reaktanten für eine ausreichend lange Zeit in Kontakt mit dem Katalysatormaterial sein. Dies lässt sich bei den Kompaktreaktoren nach dem Stand der Technik nicht immer erreichen. Die Dimensionen der Platten und somit die Länge der Strömungskanäle ist relativ begrenzt (EP1248675 quadratische Platten mit 200mm Seitenlänge; WO2007129108 rechteckige Platten mit 600 mm Breite und 1400 mm Länge). Um einen ausreichenden Kontakt aller Reaktanten mit dem Katalysatormaterial zu erreichen, muss somit eine gute Durchmischung der Reaktanten in den Strömungskanälen gewährleistet sein.

Der vorliegenden Erfindung liegt daher die Aufgabe zugrunde, die Durchmischung der Reaktanten der gasförmigen und/oder flüssigen Medien in einem Kompaktreaktor gemäß dem Oberbegriff des Anspruches 1 zu verbessern.

Die gestellte Aufgabe wird durch einen Kompaktreaktor der eingangs erwähnten Art gelöst, dessen Fins zwischen den einzelnen Strömungskanälen einer Platte für das, in den Strömungskanälen strömende, gasförmige und/oder flüssige Medium durchlässig sind.

Der Grundgedanke der Erfindung ist es, die Durchmischung der einzelnen Reaktanten in den gasförmigen und/oder flüssigen Medien in den einzelnen Strömungskanälen durch eine Quervermischung zwischen den einzelnen Strömungskanälen zu verbessern. In den Strömungskanälen einer Platte strömt das gleiche gasförmige und/oder flüssige Medium. Durch die erfindungsgemäße Durchlässigkeit der Fins für dieses Medium wird die Quervermischung zwischen den einzelnen Strömungskanälen und somit auch die die Durchmischung der Reaktanten in den einzelnen Strömungskanälen verbessert. Dadurch wird der Kontakt der Reaktanten mit dem Katalysatormaterial und mithin der Reaktionsverlauf bzw. die Reaktionsausbeute verbessert.

Zusätzlich wird durch die erfindungsgemäße Durchlässigkeit der Fins das gesamte Temperaturprofil des Kompaktreaktors verbessert und deutlich gleichmäßiger. An den Stellen, wo die Fins für das jeweilige Medium durchlässig sind, bildet sich durch die ermöglichte Quervermischung erhöhte Turbulenz in der Strömung der Medien aus. Durch die höhere Turbulenz wird der Wärmeübergang von den strömenden Medien auf die Fins und somit auf die Platten verbessert. Dadurch ist der Wärmeaustausch zwischen durch die Platten getrennten Medien deutlich verbessert und es bildet sich ein einheitlicheres und gleichmäßigeres Temperaturprofil in dem Kompaktreaktor aus.

Durch die erfindungsgemäße Durchlässigkeit der Fins wird daher die Querverteilung der Medien innerhalb einer Strömungsebene und gleichzeitig der Temperaturübergang zwischen zwei benachtbarten Strömungsebenen deutlich verbessert. Die Breite der Fins und der Strömungskanäle kann dabei durchaus verschieden sein und auf die jeweils ablaufenden Reaktionen optimiert werden.

In einer bevorzugten Ausgestaltung der Erfindung sind die Fins an den Wänden perforiert. Die Perforierung der Fins ist eine einfache Methode, die Fins für das gasförmige und/oder flüssige Medium durchlässig auszuführen.

Gemäß einer besonders bevorzugten Ausführung der Erfindung ist das Katalysatormaterial in Form einer gewellten Folie in die Strömungskanäle des Kompaktreaktors eingebracht, wobei die Folie perforiert ist. Katalysatormaterial in Form von wellenförmig angeordneten Folien ist im Stand der Technik bereits bekannt und ein etabliertes Mittel der Kontaktierung der Reaktanten mit dem Katalysatormaterial ohne große Beeinträchtigung der Strömung der Reaktanten. Durch die vorteilhafte Perforierung der Folie wird eine weitere Verbesserung der Quervermischung mit den damit verbundenen, bereits geschilderten, Vorteilen erreicht.

Bevorzugt wird der erfindungsgemäße Kompaktreaktor zur gleichzeitigen Durchführung einer endothermen Dampf-Reformierung und einer katalytischen Verbrennung oder zur Durchführung einer Fischer-Tropsch Synthese im Wärmeaustausch mit einem Kälteträger.

Die Durchführung eines Verfahren zur gleichzeitigen Durchführung einer endothermen Dampf-Reformierung und einer katalytischen Verbrennung in einem erfindungsgemäßen Kompaktreaktor in einem Temperaturbereich zwischen 700°C und 850°C, besonders bevorzugt unterhalb von 750°C, erweist sich ebenfalls als vorteilhaft. In der besonders bevorzugten Ausgestaltung der Erfindung wird bei der katalytischen Verbrennungsreaktion eine Austrittstemperatur der Medien aus dem Kompaktreaktor von 750°C nicht überschritten.

Mit der vorliegenden Erfindung gelingt es insbesondere, die Durchmischung der Reaktanten in dem gasförmigen und/oder flüssigen Medium innerhalb der Strömungskanäle des Kompaktreaktors zu verbessern. Dadurch wird eine verbesserte Reaktionsführung erreicht.

## Patentansprüche

1. Kompaktreaktor bestehend aus einer Vielzahl stapelförmig angeordneter und voneinander beabstandeter Platten, wobei
a) die Platten durch Abstandshalter beabstandet und gegeneinander gasdicht abgedichtet sind,
b) die Platten wellenförmig profiliert sind, so dass durch die Wellentäler Strömungskanäle gebildet werden, welche durch die Wellenberge (Fins) voneinander getrennt sind,
c) die Strömungskanäle parallel zueinander und parallel zu einer Seite der Platte verlaufen,
d) die Strömungskanäle zumindest teilweise mindestens ein Katalysatormaterial enthalten, welches derart eingebracht ist, dass die Strömungskanäle für gasförmige und/oder flüssige Medien durchströmbar sind, und
e) der Kompaktreaktor Mittel zur Zu- bzw. Abführung (Header) von mindestens zwei gasförmigen und/oder flüssigen Medien zu den Strömungskanälen aufweist,
**dadurch gekennzeichnet, dass** die Fins zwischen den einzelnen Strömungskanälen einer Platte für das, in den Strömungskanälen strömende, gasförmige und/oder flüssige Medium durchlässig sind.

2. Kompaktreaktor nach Anspruch 1, **dadurch gekennzeichnet, dass** die Fins an den Wänden perforiert sind.

3. Kompaktreaktor nach Anspruch 1 oder 2, **dadurch gekennzeichnet, dass** das Katalysatormaterial in Form einer gewellten Folie in die Strömungskanäle eingebracht ist, wobei die Folie perforiert ist.

4. Verwendung eines Kompaktreaktors nach Anspruch 1 oder 3 zur gleichzeitigen Durchführung einer endothermen Dampf-Reformierung und einer katalytischen Verbrennung.

5. Verwendung eines Kompaktreaktors nach einem der Ansprüche 1 bis 3 zur Durchführung einer Fischer-Tropsch Synthese im Wärmeaustausch mit einem Kälteträger.

6. Verfahren zur gleichzeitigen Durchführung einer endothermen Dampf-Reformierung und einer katalytischen Verbrennung in einem Kompaktreaktor nach einem der Ansprüche 1 bis 3, **dadurch gekennzeichnet, dass** das Verfahren in einem Temperaturbereich zwischen 700°C und 850°C, besonders bevorzugt unterhalb von 750°C, durchgeführt wird.
